# EUROPEAN PATENT SPECIFICATION

(11) **EP 4 227 568 B1**
(45) Date of publication and mention of the grant of the patent: **15.01.2025**
(21) Application number: 23153934.7
(22) Date of filing: 30.01.2023
(51) Int. Cl.: F16L 37/26

(54) **QUICK CONNECT COUPLING**
SCHNELLKUPPLUNG
RACCORD RAPIDE

(30) Priority: 14.02.2022 IT 202200002630
(43) Date of publication of application: 16.08.2023
(73) Proprietor: Polo S.R.L., 20037 Paderno Dugnano (MI) (IT)
(72) Inventor: POZZI, Marco, 23900 LECCO (IT); LOCATELLI, Silvia, 23900 LECCO (IT)
(74) Representative: PGA S.p.A.

(56) References cited:
- DE-B- 1 059 727
- FR-A- 1 502 148
- US-A- 2 257 321
- US-A- 2 890 066
- US-A1- 2004 094 959
- US-B2- 10 072 783

## Description

### Field of the invention

The present invention has as object a quick coupling device. The present invention is in the field of devices that can connect two conduits together and disconnect two conduits quickly and without the use of tools or utensils. In particular, the present invention is in the field of devices that can connect two conduits hermetically and suitable for the transfer of both pressurized and vacuum fluids.

### Background art

There are known devices, already on the market since several years, that execute similar functions.

For example, adapters known as "Cam-Lock" couplings ensure the connection of a conduit through the actuation of a plurality of levers that act on only a few circumferential points, effectively limiting the ability to operate at very high pressures.

The "WEO plug-in" type inserts ensure the connection though a plurality of "metal sectors" that engage in suitable seats of very small dimensions.

The Applicant has observed that known quick-connect devices such as those described above are improvable in several aspects, in particular with reference to ease of construction and thus reliability and cost of production.

The Applicant has in particular observed that, in "Cam-Lock" couplings, the presence of a plurality of levers that must be individually operated and then individually secured in the connection position make such devices challenging from the point of view of their use and expensive to produce and assemble.

The Applicant has also observed that the "WEO plug-in" inserts result to be complex to produce and also do not guarantee high performance in terms of flow rates and operating pressures. The sophisticated construction of such inserts also makes a periodic maintenance necessary.

The following public documents are also known.

The document US 2 890 066 A shows a coupling device for connecting together sections of tubular elements, such as pipes, conduits and similar, and which can be constructed to allow the relative longitudinal movement between adjacent sections of pipe that are coupled together while keeping the pipe sections connected.

The document US 2 257 321 A shows a coupling for a conduit, a pipe, a flexible pipeline, or similar elements.

The document FR 1 502 148 A shows a device for head-to-head joining of two axially elongated objects, for example, two cylindrical objects, such as two pipes, two beams or, more generally, two objects elongated along an axis.

### Purpose of the invention

In this context, the Applicant has set itself the object of proposing a quick coupling device that can overcome the above-mentioned drawbacks and with better quality, performance, cost and reliability than those of the known technique.

The Applicant has in particular set itself the object of proposing a quick coupling device that can offer better performance in terms of operating pressures, i.e., that can guarantee hermeticity both and suitable for the transfer of fluids under both pressure and vacuum, both at very high pressures and with depressions of high vacuum.

The Applicant also has set the object of proposing a quick coupling device that is structurally simple and therefore reliable, durable, and requires a low level of maintenance.

The Applicant also set the object of proposing a quick coupling device that could be realized with significantly lower costs than the known technique.

The Applicant has also set itself the object of proposing a quick coupling device that is simple and quick to use, i.e., that allows an operator to make connections and disconnections without the use of tools or utensils.

The Applicant also has set itself the object of proposing a quick coupling device that can be used in various fields of application, such as: connection of hydraulic/oleodynamic circuits (such as the connection of an oleodynamic power unit and a hydraulic cylinder); connection of pneumatic/gas circuits; connection of devices to test benches; connection of devices to earth-moving machines or agricultural machines; quick coupling of mechanical devices/equipment.

### Summary of the invention

The Applicant has found that these objects and purposes can be obtained by realizing a quick coupling device according to the present invention, of the type claimed in the attached claims.

In particular, the quick coupling device according to the invention is obtained by joining two bodies whose ends are shaped according to specific complementary outlines so that they can engage and disengage from each other.

The present invention relates to a quick coupling device according to claim 1.

In the engaged configuration and in the retaining position, the outer sleeve prevents relative movements of the first body and of the second body along directions transverse to the axial direction (for example, radial), which would be allowed in the absence of the outer sleeve placed in the junction zone, and thus prevents any possibility of release of the two bodies.

In the engaged configuration and in the release position, the first body and the second body can be moved the one with respect to the other along directions transverse to the axial direction and therefore disengaged.

The axial constraint ensured by the profile of the first body and of the second body ensures a solid and strong axial mechanical connection.

The present invention also relates to a method for making the quick coupling device according to the invention.

The Applicant has verified that the quick coupling device according to the invention allows to obtain the objects and purposes listed above.

In particular, the quick coupling device according to the invention is structurally simple and, thanks to the ease of construction, is extremely easy to use and also economical to manufacture and maintain. In fact, the device of the invention consists of only a few elements, and some of these are standard sealing elements that are obtainable on the market in large quantities and at very low cost. In particular, the only elements that need to be specially manufactured (for example, obtained by machining) are the main body, consisting of the first body and the second body, and the outer sleeve.

Furthermore, the quick coupling device according to the invention is tough and has excellent performance in terms of operating pressures, i.e., it ensures tightness both at very high pressures and with high vacuum depressions.

Furthermore, the device according to the invention can be manually operated and does not require any tools or implements to perform the connecting and disconnecting operations.

Furthermore, the device according to the invention allows to completely leave the main conduit free, which can have section and flow rate at maximum efficiency.

Further aspects of the invention are listed below.

In an aspect, in addition to said at least a first hook, said at least a second hook and the outer sleeve, no other elements are necessary to determine the mechanical connection.

The first body exhibits a first perimeter wall delimiting the first section.

The second body exhibits a second perimeter wall delimiting the second section.

An edge of the first perimeter wall opposite the first end and an edge of the second perimeter wall opposite the second end are shaped to attach removably to each other.

The shaping of the aforementioned edges, which allows to engage the edges with each other so as to axially constrain the first body and the second body, ensures the aforementioned solid and strong mechanical connection.

At least a first hook is shaped in the edge of the first perimeter wall and at least a second hook is shaped in the edge of the second perimeter wall; said at least a first hook and said at least a second hook being configured to engage with each other.

The aforementioned edges are shaped to form the hooks which therefore protrude axially from the respective first body and second body.

The first perimeter wall exhibits two first hooks placed in radially opposite areas of the first body and the second perimeter wall exhibits two second hooks placed in radially opposite areas of the second body; the two first hooks being configured to engage with the two second hooks.

The presence of two hooks placed in radially opposite positions on each of the two bodies (first body and second body) with respect to a longitudinal axis of the main body allows to ensure the maximum axial mechanical seal and furthermore to allow the hooking and unhooking along the mentioned directions transverse to the axial direction.

In an aspect, the two first hooks are symmetrical with respect to a plane of symmetry of the first body containing a longitudinal axis of the first body.

In an aspect, the two second hooks are symmetrical with respect to a plane of symmetry of the second body containing a longitudinal axis of the second body.

In an aspect, in the engaged configuration, the longitudinal axis of the first body and the longitudinal axis of the second body coincide with the longitudinal axis of the main body.

In an aspect, said at least a first hook and said at least a second hook exhibit profiles such as to form a continuous perimeter wall of the main body when the main body is in the engaged configuration.

In an aspect, said at least a first hook and said at least a second hook exhibit the same outline.

In an aspect, said at least a first hook and said at least a second hook exhibit orientation opposite to a plane containing a longitudinal axis of the main body.

The outline of the first hook and of the second hook is such that, when the main body is in the engaged configuration and the first hook is engaged with the second hook, the first perimeter wall and the second perimeter wall are intimately juxtaposed with each other so that the resulting perimeter wall of the main body is continuous.

In an aspect, in the engaged configuration, the continuous perimeter wall of the main body exhibits a separation line or circumferential cut that delimits the first body and the second body and delimits said at least a first hook and said at least a second hook.

At that circumferential cut, the first body and the second body are joined/juxtaposed so that, as above specified, the perimeter wall of the main body is continuous.

In an aspect, the circumferential cut, at said at least a first hook and said at least a second hook, i.e., the joining zone, exhibits an S-outline.

In an aspect, in a lateral view of the first body and of the second body, said at least a first hook and said at least a second hook exhibit an L-outline.

Each of said at least a first hook and of said at least a second hook exhibits an overhang and a recess. The overhang delimits the recess.

In an aspect, the overhang and the recess are placed near a reference plane containing the longitudinal axis of the main body.

In an aspect, the overhang and the recess are placed partly on one side and partly on an opposite side of the reference plane.

In an aspect, the overhang and the recess develop half on one side and half on an opposite side of the reference plane.

The recess of said at least a first hook reproduces in negative the overhang of said at least a second hook and the recess of said at least a first hook reproduces in negative the overhang of said at least a first hook.

In an aspect, the overhang and the recess exhibit a rectangular or square perimeter.

In an aspect, the overhang and the recess exhibit a trapezoidal perimeter, in which a major base of the trapezoidal recess corresponds to a bottom of said recess and a major base of the trapezoidal overhang corresponds to a free end of said overhang.

Corners of the overhang and/or recess are rounded. Appropriate radiuses are made to prevent deformations and points of failure or weakening during operation when subjected to high pressure

In an aspect, the overhang exhibits a height "H" with respect to a bottom of the recess, the height being measured perpendicular to said reference plane.

In an aspect, the overhang exhibits a width "L" measured parallel to the longitudinal axis.

In an aspect, the width "L" of the overhang is slightly lower than a width of the recess to allow the overhang of a hook of the first body to fit into the recess of the hook of the second body and to allow the overhang of a hook of the second body to fit into the recess of the hook of the first body.

In an aspect, the width "L" of the overhang and/or the width of the recess is/are similar or equal to the height "H".

In an aspect, the width "L" of the overhang and of the recess and the height "H" are calculated to support the axial loads deriving from the operating pressure that the device must withstand.

In an aspect, at least one of said first body and second body comprises a first part and a second part free to rotate with respect to each other, optionally according to angles lower or greater than 360°.

In an aspect, the first part and the second part are juxtaposed with each other and axially aligned.

In an aspect, the first part comprises said at least a first hook or second hook and the second part comprises the first end or the second end.

In an aspect, an outer ring nut is integral to the first part or to the second part and is configured to axially retain the second part or the first part and allow the first part and second part to be free to rotate relative to each other.

In an aspect, the outer ring nut is screwed onto the first part or the second part.

In an aspect, the outer ring nut exhibits an annular recess engaged against an annular surface of the second part or the first part.

The possibility of rotating the first part with respect to the second part and thus the first end with respect to the second end of the device allows the attachment of conduits that require, during their operation, a slow but continuous twisting and/or allows the components attached to the first and second end of the device to be oriented in the best possible way, according to the use to be made.

In an aspect, the second body, which carries the outer sleeve, comprises the first part and the second part, and this allows to facilitate the connection because, by rotating one part with respect to the other, it is possible for the operator to better see the hooks.

In an aspect, the first end exhibits an inner or outer thread configured to connect said first end to the respective conduit.

In an aspect, the second end exhibits an inner or outer thread configured to connect said second end to the respective conduit.

In an aspect, the main body is cylindrical.

In an aspect, the main body exhibits circular transverse sections.

In an aspect, in the engaged configuration of the main body, the first section and the second section of the passage conduit are aligned and coaxial.

In an aspect, the first section and the second section of the passage conduit exhibit a same section area.

In an aspect, the passage conduit exhibits a constant section area.

In an aspect, a first sealing element (for example an O-ring) is arranged around the first body, optionally housed in a respective groove of the first body.

In an aspect, a second sealing element (for example an O-ring) is arranged around the second body, optionally housed in a respective groove of the second body.

In an aspect, when the main body is in the engaged configuration and the outer sleeve is in the retaining position, the first sealing element and the second sealing element are radially located between the main body and the outer sleeve, and the junction area is axially located between the first sealing element and the second sealing element.

In an aspect, when the outer sleeve is in the release position, only the first sealing element is radially located between the first body and the outer sleeve or only the second sealing element is radially located between the second body and the outer sleeve.

In an aspect, the outer sleeve is kept in the retaining or release position from the sliding force between an inner surface of said outer sleeve and the first sealing element and/or the second sealing element.

In an aspect, an auxiliary sealing element is arranged around the first part, optionally located in a respective groove of the first part, and a further auxiliary sealing element is arranged around the second part, optionally located in a respective groove of the second part.

In an aspect, the auxiliary sealing element is radially located between the outer ring nut and the first part and the further auxiliary sealing element is radially located between the outer ring nut and the second part.

A safety element is arranged at least partially around the first body or the second body, optionally arranged in a respective groove of said first body or second body.

When the outer sleeve is in the release position, the safety element is radially located between said outer sleeve and the first body or the second body. The outer sleeve covers and hides the safety element.

When the outer sleeve is in the retaining position, the safety element is not covered by said outer sleeve. The safety element is visible.

In an aspect, the safety element is arranged in a respective groove of said first body or second body.

In an aspect, the safety element is of plastic.

In an aspect, the safety element is colored so that it can be visually distinguished.

In an aspect, the safety element is a clamp, for example in heat-shrinkable plastic material, or a hairpin engaged on the first body or second body.

The safety element comprises an elastically loose portion; wherein, when the outer sleeve is in the release position, the elastically loose portion lies compressed between said outer sleeve and the first body or the second body; wherein when the outer sleeve is in the retaining position, the elastically loose portion lies side by side with an edge of the outer sleeve and protrudes radially. In this position, the elastically loose portion prevents the outer sleeve from sliding to the release position.

In an aspect, preparing the first body and the second body comprises:
making the main body in one piece;
cutting the main body in two to form said first body and said second body.

In an aspect, preparing the first body and the second body comprises: making each of said first body and second body independently, optionally through a CNC machine tool.

In an aspect, preparing the first body or the second body comprises furthermore: preparing the first part and the second part.

In an aspect, preparing the first part and the second part comprises: cutting the first body or the second body in two or making the first part and the second part independently, optionally through a CNC machine tool.

In an aspect, the step(s) of cutting the main body in two and/or cutting the first body or the second body in two is/are made by wire electroerosion or laser cutting.

### Short description of the figures

Further characteristics and advantages will become more apparent from the detailed description of preferred, but non-exclusive, embodiments of a quick coupling device according to the present invention.

This description will be provided below with reference to the attached figures, provided for illustrative purposes only and, therefore, non-limiting, in which:
- figure 1 shows a quick coupling device in an operating configuration according to the present invention;
- figure 2 shows a longitudinal section of the quick coupling device of figure 1;
- figure 2A is an enlarged portion of figure 2;
- figure 3 shows the quick coupling device of figure 1 in a different operating configuration;
- figure 4 shows a longitudinal section of the quick coupling device of figure 3;
- figure 5 the quick coupling device of figure 1 in another operating configuration;
- figure 6 shows a longitudinal section of the quick coupling device of figure 5;
- figure 6A is an enlarged portion of figure 6;
- figure 7 is a three-dimensional view of an element of the device in the previous figures;
- figure 7A is a front view of the element of figure 7;
- figure 8 is a three-dimensional view of a different element of the device in the previous figures;
- figure 8A is a front view of the element of figure 8;
- figure 9 is an enlarged sectional portion of a variant of the device in the previous figures;
- figure 10 shows a variant of an element of the device in the previous figures;
- figures 11A and 11B show respective steps of realization of the device in the previous figures;
- figure 12 shows a different embodiment of the quick coupling device according to the present invention;
- figure 13 shows a longitudinal section of the quick coupling device of figure 10;
- figure 13A is an enlarged portion of the device of figure 13.

### Detailed description of preferred embodiments of the invention

With reference to the attached figures, with 1 is overall indicated a quick coupling device according to the present invention.

The device 1 comprises a cylindrical main body 2 exhibiting a longitudinal axis "X-X". The main body 2 is for example axisymmetric with respect to its own longitudinal axis "X-X" and exhibits circular transverse sections. The main body 2 delimits to its own a passage conduit 3 for a fluid, which is open at its two ends, develops along the longitudinal axis "X-X" and exhibits, in the non-limiting embodiment shown, a circular and constant passage section along its axial development. The main body 2 is made of metal, for example steel. The main body 2 exhibits a first end 4 and a second end 5 opposite the first end 4 at which the ends of the passage conduit 3 open. The first end 4 and the second end 5 of the main body 2 are configured to connect with respective conduits, non-shown, through outer threads cut on them. In other variants, non-shown, the first end 4 and the second end 5 exhibit inner threads, or one inner and one outer. For example, the conduits to which the device 1 can be connected are conduits of hydraulic/oleodynamic circuits; pneumatic/gas circuits; devices to test benches; devices for earth-moving machines or agricultural machines; mechanical devices/equipment.

The main body 2 exhibits two hexagonal portions 6, each one near a respective end 4, 5, configured for being engaged by appropriate tools for coupling with the aforementioned conduits.

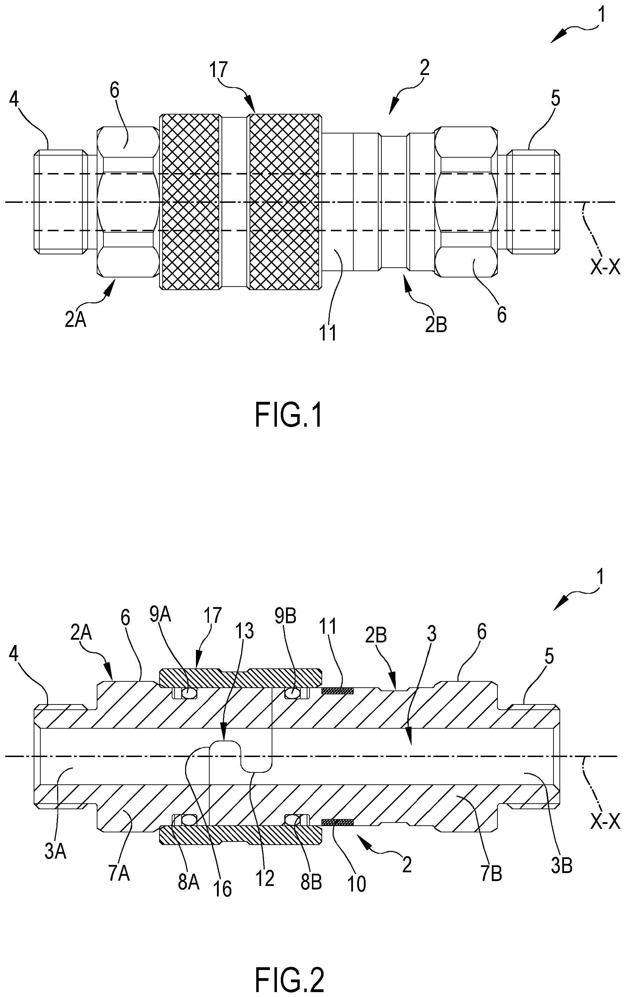

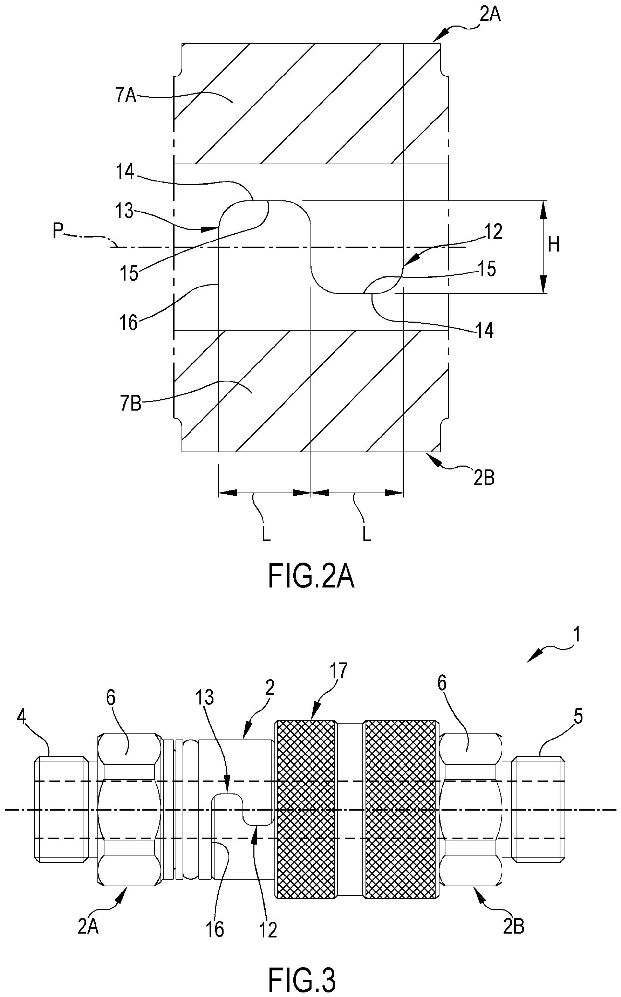

As visible in figures 2-8, the main body 2 is cut in two and comprises a first body 2A and a second body 2B. The first body 2A delimits internally a first section 3A of the passage conduit 3 and the second body 2B delimits internally a second section 3B of said passage conduit 3.

The first body 2A exhibits a first cylindrical perimeter wall 7A that delimits internally the first section 3A. The first 7A exhibits one of the hexagonal portions 6 and comprises the first end 4 of the main body 2 that is axially arranged side by side with said hexagonal portion 6. On a radially outer surface of the first perimeter wall 7A of the first body 2A is obtained a respective groove 8A in which is housed an O-ring, i.e. a sealing element 9A surrounding the first body 2A. The groove 8A is arranged on one side of the hexagonal portion 6 opposite the first end 4.

The second body 2B exhibits a cylindrical second perimeter wall 7B internally delimiting the second section 3B. The second perimeter wall 7B exhibits one of the hexagonal portions 6 and comprises the second end 5 of the main body 2 that is axially arranged side by side with said hexagonal portion 6. On a radially outer surface of the second perimeter wall 7B of the second body 2B is obtained a respective groove 8B in which is housed an O-ring, i.e. a sealing element 9B surrounding the second body 2B. The groove 8B is arranged on one side of the hexagonal portion 6 opposite the second end 5 and between the groove 8B and the hexagonal portion 6 is obtained a further respective groove 10 in which is housed a clamp. The further respective groove 10 is placed in proximity of groove 8A with the sealing element 9A. The clamp is a safety element 11 arranged around the second body 2B and is, for example, made of colored heat-shrinkable plastic material so that it can be visually distinguished.

The first body 2A and the second body 2B are shaped to removably engage with each other at a junction area, so that they can be engaged and disengaged multiple times without breaking/damaging the device 1. When they are engaged with each other, i.e. the main body 2 is in an engaged configuration (figures 1 - 4), the first body 2A and the second body 2B are axially aligned and constrained along an axial direction and the first section 3A and the second section 3B of the passage conduit 3 are aligned and coaxial.

A longitudinal axis of the first body 2A and a longitudinal axis of the second body 2B coincide with the longitudinal axis "X-X" of the main body 2.

For this purpose, an edge of the first perimeter wall 7A opposite the first end 4 and an edge of the second perimeter wall 7B opposite the second end 5 are shaped to removably engage with each other.

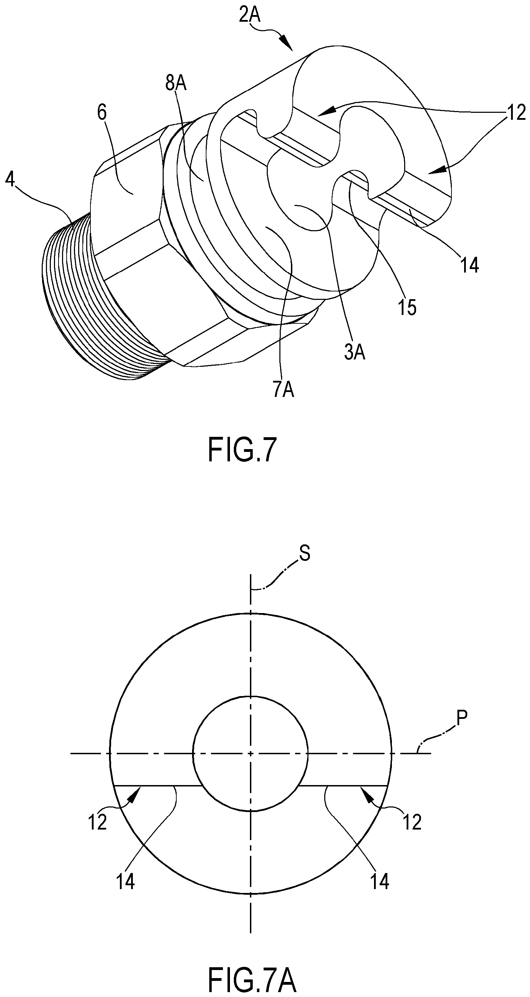

At an edge of the first body 2A opposite the first threaded end 4, the edge of the first perimeter wall 7A is shaped so as to shape two first hooks 12 located in radially opposite areas with respect to the longitudinal axis of the first body 2A. The two first hooks 12 are symmetrical positioned with respect to a plane of symmetry "S" in which the longitudinal axis of the first body 2A (figure 7A) lies and can exhibit the same shape and dimension or shapes and dimensions different among them.

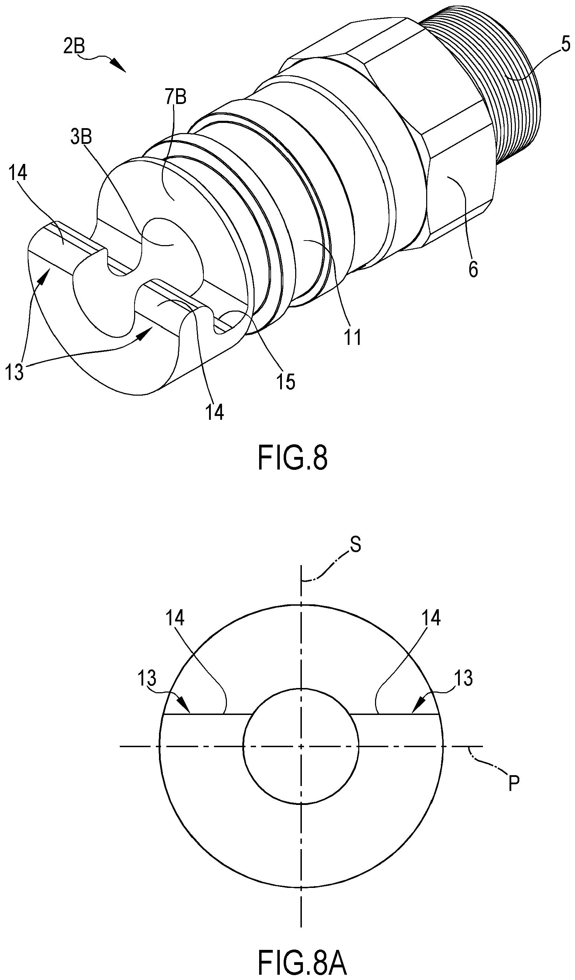

At an edge of the second body 2B opposite the second threaded end 5, the edge of the second perimeter wall 7B is shaped so as to shape two second hooks 13 located in radially opposite areas with respect to the longitudinal axis of the second body 2B. The two second hooks 13 are symmetrical positioned with respect to a plane of symmetry "S" in which the longitudinal axis of the second body 2B (figure 8A) lies and can exhibit the same shape and dimension or shapes and dimensions different among them.

The two first hooks 12 are configured to engage with the two second hooks 13 so that when the main body 2 is in the engaged configuration, the resulting perimeter wall of the main body 2, obtained from the union of the first perimeter wall 7A and of the second perimeter wall 7B, is continuous also at the junction area.

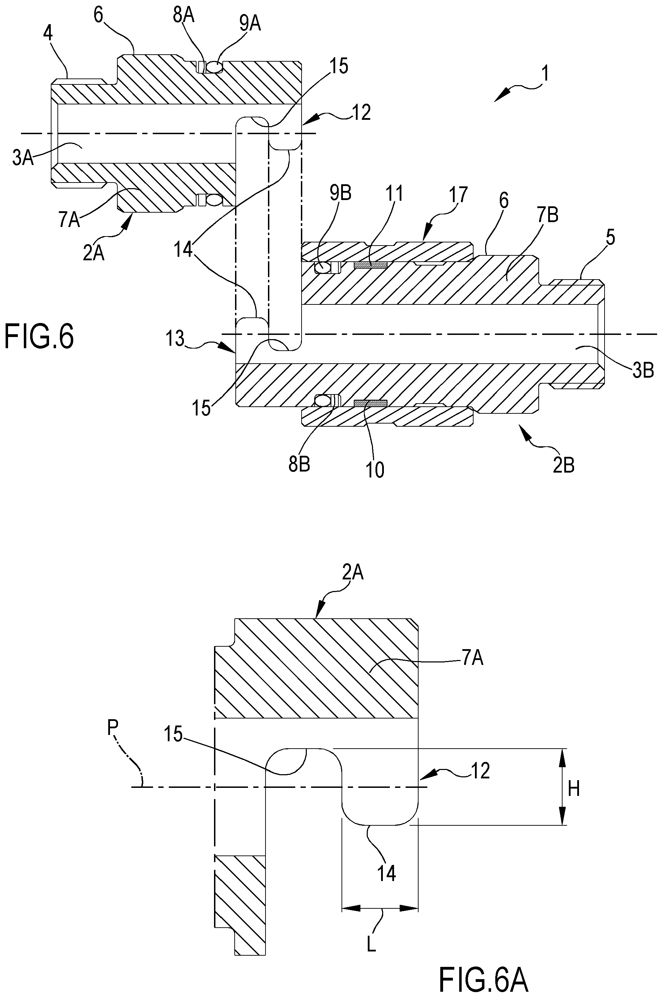

In the shown embodiment, each of the first hooks 12 and of the second hooks 13 exhibits, looking at the first body and the second body laterally as in figures 2, 2A, 4, 5 and 6, an L-outline that protrudes axially from the respective first body 2A or second body 2B. As better visible in figures 2A and 6A, the L-outline exhibits an overhang 14 which delimits a recess 15. The overhang 14 and the recess 15 are placed near a reference plane "P" which contains the longitudinal axis "X-X" of the main body 2. This reference plane "P" is perpendicular to the above-mentioned plane of symmetry "S" and the overhang 14 and the recess 15 develop about half on one side of the reference plane "P" and about half on an opposite side of the reference plane "P".

The overhang 14 of each of the first hooks 12 exhibits the profile of each of the recesses of the second hooks 13 and the recess 15 of each of the first hooks 13 exhibits the profile of each of the recesses of the second hooks 12. In other words, each recess 15 of the first hooks 12 reproduces in negative each overhang 14 of the second hooks 13 and each recess 15 of the second hooks 12 reproduces in negative each overhang 14 of the first hooks 13.

In this way, the first hooks 12 and the second hooks 13 exhibit profiles such as to form a continuous perimeter wall of the main body 2 when the main body 2 is in the engaged configuration. In the engaged configuration, the continuous perimeter wall of the main body 2 exhibits a separation line or circumferential cut 16 that delimits the first body 2A and the second body 2B and delimits the first hooks 12 and the second hooks 13. At the hooks 12, 13, i.e. at the joining zone, the separation line or cut exhibits an S-outline and the first body 2A and the second body 2B are joined/juxtaposed so that, as above specified, the perimeter wall of the main body 2 is continuous.

In the shown exemplary embodiment in the attached figures, the overhang 14 and then the recess 15 exhibit a rectangular outline with rounded or chamfered edges so as to prevent the concentration of stresses and the triggering of failure zones during operation (when the device is subject, for example, to high pressure). As shown in figures 2A and 6A, the overhang 14 exhibits a height "H", wherein the height "H" is measured with respect to a bottom of the recess 15 and perpendicular to said reference plane "P". The overhang 14 exhibits a width "L" measured parallel to the longitudinal axis "X-X". The width "L" of the overhang 14 is substantially equal to the one of the recess 15, or is slightly lower than the width of the recess 15 to allow the overhang 14 of the first hook 12 of the first body 2A to fit into the recess 15 of the second hook 13 of the second body 2B and to allow the overhang 14 of the second hook 13 of the second body 2A to fit into the recess 15 of the first hook 12 of the first body 2A.

The hooks 12, 13 are sized for supporting the axial loads deriving from the operating pressure at which the device must work 1. The first hooks 12 and the second hooks 13 will have to have a height "H" which determines the transverse offset with respect to the reference plane "P" such that the first body 2A and the second body 2B remain mechanically "clinging" to each other.

The first body 2A and the second body 2B are axially restrained through the first hooks 12 and the second hooks 13 but are free to disengage along at least one direction transverse to the axial direction "X-X". In fact, by moving the first body 2A with respect to the second body 2B along a radial direction, there are no constraints that prevent them from moving radially apart and disengaging.

The device 1 comprises furthermore an outer sleeve 17 arranged around the main body 2. The outer sleeve 17 exhibits a substantially cylindrical outline, is made for example of steel and, in the shown embodiment, exhibits a radially outer knurled surface to facilitate an operator's grip.

An inner diameter of the outer sleeve 17 is sized to slide with very few hundredths of a millimeter of clearance with respect to an outer diameter of the main body. A thickness of a wall of the outer sleeve 17 is calculated of adequate size to resist without deformations the inner pressure that develops during operation of the device 1.

The outer sleeve 17 has a dual function: to keep the first body 2A and second body 2B joined and aligned rigidly and to make the main conduit 3 sealed by going to engage with the sealing elements 9A, 9B.

The outer sleeve 17 is mounted on the second body 2B and can slide axially on the second body 2B when manually operated. If it is not manually moved, the outer sleeve 17 remains on the second body 2A and does not slide, due to sliding force between an inner surface of that outer sleeve 17 and the sealing element 9B surrounding the second body 2B.

In the engaged configuration of the main body 2, the outer sleeve 17, when manually operated, is movable slidingly on the main body 2 between a retaining position and a release position.

In the retaining position, the outer sleeve 17 is displaced to the left (in figures 1 and 2) and is placed around the junction area so as to prevent any relative radial movement between the first body 2A and the second body 2B and thus the release of the first body 2A from the second body 2B.

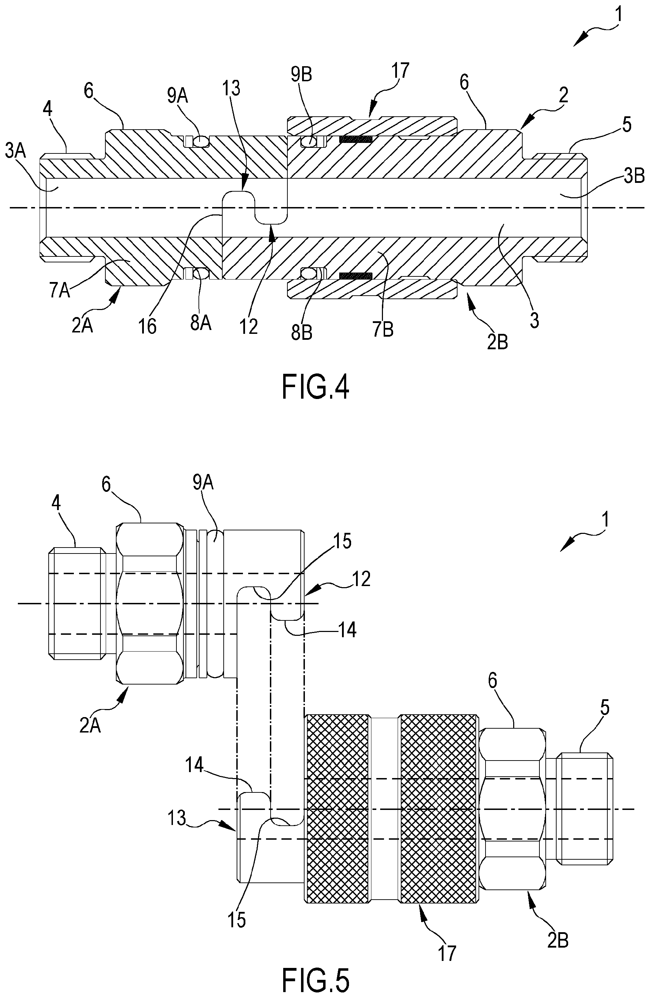

In the release position, the outer sleeve is displaced to the right (in figures 1 and 2) ed is spaced apart from the junction area, so as to allow a radial movement of the first body 2A with respect to the second body 2B and then the release of the first body 2A from the second body 2B (figures 5 and 6).

For engaging again the first body 2A to the second body 2B, the operator grabs the first body 2A and the second body 2B arranging the first hooks 12 and the second hooks 13 reciprocally facing each other and in opposite orientation with respect to the reference plane "P" and inserts the overhang 14 of each hook 12, 13 into the recess 15 of the other hook 13, 12 while the outer sleeve 17, mounted on the second body 2A, is in the release position, and then moves the outer sleeve 17 into the retaining position.

The outer sleeve 17 is the only element that the operator must operate by sliding it along the longitudinal axis "X-X" of the device 1 in order to obtain the connection or disconnection of the passage conduit 3.

As it can be seen from the attached figures 1 - 6, when the main body 2 is in the engaged configuration and the outer sleeve 17 is in the retaining position, the first sealing element 9A and the second sealing element 9B are radially located between the main body 2 and the outer sleeve 17, and the joining area is axially located between the first sealing element 9A and the second sealing element 9B. The fluid that leaks through the circumferential cut 16 is hermetically retained by the sealing elements 9A, 9B. Furthermore, in the retaining position, the safety element 11 (clamp in figures 1 and 2) is visible because it is not covered by the outer sleeve 17 and in this way highlights to the operator that the device 1 is firmly engaged (state of effective connection) and can be put into service. The outer sleeve 17 keeps its position during the operation because it is retained in place by the sliding force exerted by the sealing elements 9A, 9B.

When the outer sleeve 17 is in the release position, only the second sealing element 9B is radially located between the second body 2B and the outer sleeve 17 and in this way prevents the outer sleeve 17 from sliding and disengaging from the second body 2B. Furthermore, in the retaining position, the safety element 11 (clamp in figures 3 and 4) is hidden and this indicates that the device is not operating and can be disengaged.

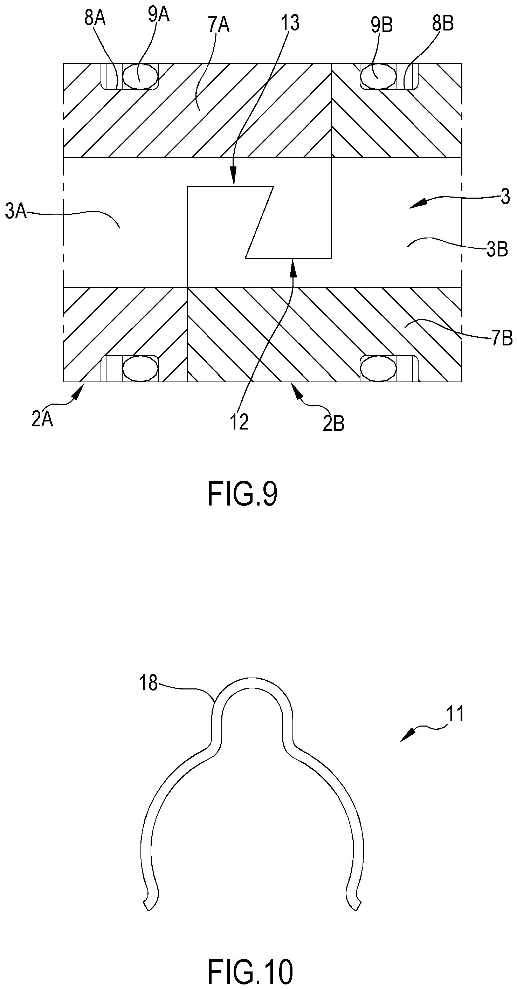

Figure 9 shows a variant of the first hooks 12 and of the second hooks 13, wherein the shape of the overhangs 14 and of the recesses 15 is trapezoidal so as to form an undercut. A major base of the trapezoid corresponds to a bottom of said recess 15 and at a free end of the overhang 14. In this way, there is a single radial direction along which the first body 2A and the second body 2B can be disengaged that direction is orthogonal to the plane of symmetry "S".

Figure 10 shows a variant of the safety element 11. In this variant, the safety element 11 is not a ring but a hairpin or clip of plastic and elastic material that is arranged and attached between the second body 2B at the groove 10. The hairpin comprises an elastically loose portion 18 that, when said hairpin is mounted on the second body 2B, protrudes radially. The hairpin is also colored so that it can be visually distinguished.

In addition to visually signaling the position of the outer sleeve 17, the hairpin also performs a locking function for said outer sleeve 17. In fact, when the outer sleeve 17 is in the release position, the elastically loose portion 18 lies compressed between said outer sleeve 17 and the second body 2B. When the outer sleeve 17 is in the retaining position, the elastically loose portion lies side by side with an edge of the outer sleeve 17. In this position, the elastically loose portion protrudes radially beyond the outer sleeve 17 and prevents the outer sleeve 17 from sliding to the release position. The hairpin therefore ensures an additional degree of security to the device 1.

The present invention is also related to a method for realizing the quick coupling device 1 such as the one above described.

According to the method, it is expected at first to prepare the first body 2A and the second body 2B shaped to removably engage with each other at the junction area. Then they are mounted the sealing element 9A and the sealing element 9B in the respective grooves 8A, 8B and the clamp or the hairpin in the respective groove 10. Then the outer sleeve 17 is arranged on the second body 2B by sliding it axially on the sealing elements 9A, 9B. At this point, the quick coupling device 1 can be used by constraining the first body 2A to one conduit and the second body 2B to another conduit and then coupling them together as above explained.

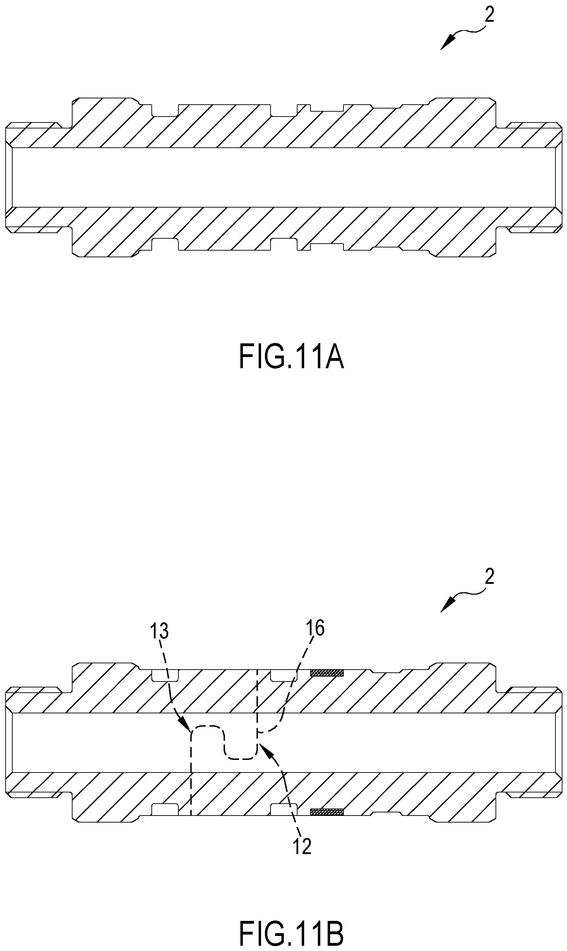

According to a variant of the method, the main body 2 is made in one piece (as shown in figure 11A), for example by fusion or molding or by CNC machine tool. The one-piece main body 2 is then cut in two, for example by wire electro-erosion or laser cutting, so as to form the first body 2A and the second body 2B, each already provided with the respective hooks 12, 13, i.e., by performing the circumferential cut 16 with the S-shapes. Figure 11B shows in hatching the outline of the cut 16.

According to a different variant of the method, the first body 2A and the second body 2B are made independently, for example by CNC machine tool. The latter process results to be the most cost-effective and accurate in execution.

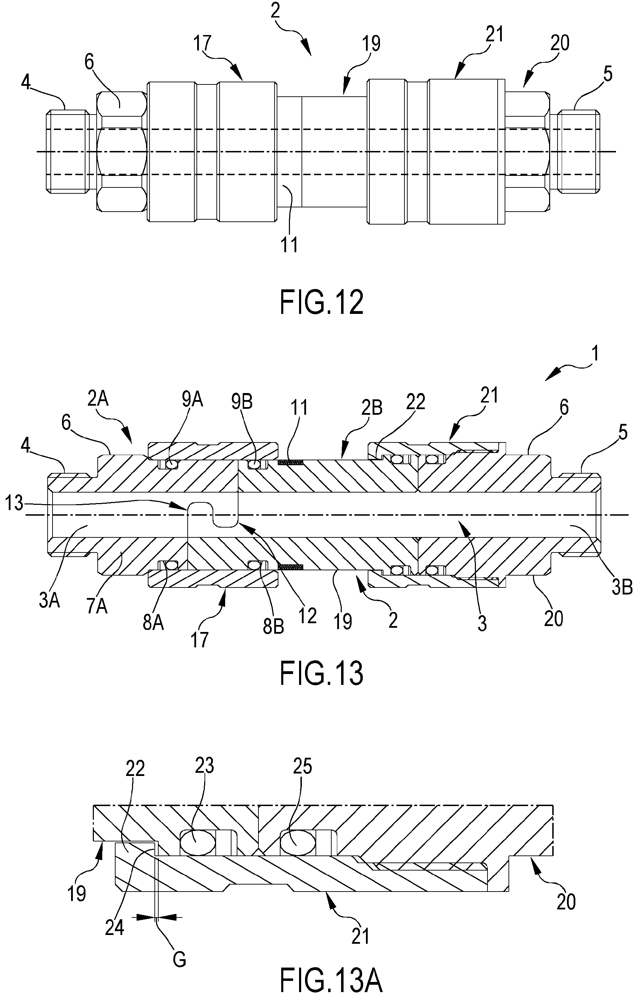

Figures 12, 13 and 14 show a variant of the device 1 again according to the invention, in which the second body 2B is itself formed by a first part 19 and a second part 20.

As it can be seen, the first body 2A, hooks 12, 13 and the outer sleeve 17 are identical to those illustrated above (and are indicated by the same reference numbers). The first part 19 and the second part 20 are juxtaposed with each other at a radial plane and are axially aligned. The first part 19 exhibits the two second hooks 13 and carries the outer sleeve 17. The second part 20 exhibits the second threaded end 5.

An outer ring nut 21 is screwed onto the second part 20 so that it protrudes axially beyond the second part 20. The outer ring nut 21 exhibits its own edge provided with an annular recess 22 that protrudes radially toward the longitudinal axis "X-X." An end portion of the first part 19, opposite to that provided with the second hooks 13, is housed within the outer ring nut 21 and is provided with an annular surface 24 facing the annular recess 22. The end portion of the first part 19 is therefore facing the second body 20 and held axially by the annular recess 22.

The axial dimensions of the elements described are such as to delimit a space or axial clearance "G" between first part 19 and second part 20 such as to allow the first part 19 to rotate freely with respect to the second part 20 around the longitudinal axis "X-X." The axial clearance "G" allows a minimum longitudinal offset which prevents the two parts 19, 20 from being "packed" and made locked by the closure of the outer ring nut 21 on the second part 20.

The hermetic seal of the passage conduit 3 is ensured by the presence of an auxiliary sealing element 23 (for example, an O-ring) arranged around the first part 19 and placed in a respective groove 24 of the first part 19 and of a further auxiliary sealing element 25 (for example, an O-ring) arranged around the second part 20 and placed in a respective groove 26 of the second part 20 (Figures 13 and 13A). The auxiliary sealing element 23 is radially placed between the outer ring nut 21 and the first part 19 and the further auxiliary sealing element 25 is radially placed between the outer ring nut 21 and the second part 20.

The first part 19 and the second part 20 can be made independently, for example through a CNC machine tool or the main body 2 is realized in one piece and then cut in three (for example by wire electro-erosion or laser cutting) so as to form the first body 2A, the first part 19 of the second body 2B and the second part 20 of the second body 2B.

The device 1 is mounted by inserting the outer ring nut 21 on the first part 19 of the second body 2B, by screwing the outer ring nut 21 on the second part 20 of the second body 2B, then proceeding to the mounting of the outer sleeve 17 as already described with reference to the embodiment of figures 1 - 11B.

### List of element

quick coupling device 1
main body 2
first body 2A
second body 2B
passage conduit 3
first section 3A
second section 3B
first end 4
second end 5
hexagonal portions 6
first perimeter wall 7A
second perimeter wall 7B
groove 8A
groove 8B
sealing element 9A
sealing element 9B
further respective groove 10
safety element 11
first hooks 12
second hooks 13
overhang 14
recess 15
separation line or circumferential cut 16
outer sleeve 17
elastically loose portion18
first part 19
second part 20
outer ring nut 21
annular recess 22
auxiliary sealing element 23
groove 24
further auxiliary sealing element 25
groove 26
longitudinal axis "X-X"
plane of symmetry "S"
reference plane "P"
width "L"
height "H"
axial clearance "G"

## Claims

1. Quick coupling device, comprising:
a main body (2) internally delimiting a passage conduit (3) for a fluid, wherein said main body (2) has a first end (4) and a second end (5) opposite the first end (4);
wherein the first end (4) and the second end (5) are configured to connect with respective conduits;
an outer sleeve (17) arranged around the main body (2);
wherein the main body (2) comprises a first body (2A) internally delimiting a first section (3A) of said passage conduit (3) and a second body (2B) internally delimiting a second section (3B) of said passage conduit (3);
wherein the first body (2A) and the second body (2B) are shaped to removably engage with each other at a junction area; wherein, in an engaged configuration of the main body (2), the first body (2A) and the second body (2B) are axially aligned and constrained along an axial direction and are free to disengage along at least one direction transverse to the axial direction;
wherein, in the engaged configuration of the main body (2), the outer sleeve (17) is slidingly movable on said main body (2) between a retaining position, wherein the outer sleeve (17) is located around the junction zone and prevents release of the first body (2A) from the second body (2B) along said at least one direction transverse to the axial direction, and a release position, in which the outer sleeve (17) is spaced apart from the junction area and allows release of the first body (2A) from the second body (2B) along said at least one direction transverse to the axial direction;
wherein the first body (2A) exhibits a first perimeter wall (7A) delimiting the first section (3A); wherein the second body (2B) exhibits a second perimeter wall (7B) delimiting the second section (3B); wherein an edge of the first perimeter wall (7A) opposite the first end (4) and an edge of the second perimeter wall (7B) opposite the second end (5) are shaped to engage removably with each other;
wherein at least a first hook (12) is shaped in the edge of the first perimeter wall (7A); wherein at least a second hook (13) is shaped in the edge of the second perimeter wall (7B); wherein said at least a first hook (12) and said at least a second hook (13) are configured to engage with each other; each of said at least a first hook (12) and of said at least a second hook (13) exhibiting an overhang (14) and a recess (15), wherein the overhang (14) delimits the recess (15);
wherein, when the main body (2) is in the engaged configuration and the first hook (12) is engaged with the second hook (13), the first perimeter wall (7A) and the second perimeter wall (7B) are intimately juxtaposed to each other so that a perimeter wall resulting of the main body (2) is continuous;
wherein the first perimeter wall (7A) exhibits two first hooks (12) located in radially opposite regions of the first body (2A);
wherein the second perimeter wall (7B) exhibits two second hooks (13) located in radially opposite regions of the second body (2B); wherein the two first hooks (12) are configured to engage with the two second hooks (13);
**characterized in that** the corners of the overhang (14) and/or of the recess (15) are rounded for preventing deformations and points of failure or weakening during operation with high pressure;
wherein the device further comprises a safety element (11) arranged at least partially around the first body (2A) or the second body (2B); wherein, when the outer sleeve (17) is in the release position, the safety element (11) is radially located between said outer sleeve (17) and the first body (2A) or the second body (2B) and the outer sleeve (17) covers and hides the safety element (11); wherein, when the outer sleeve (17) is in the retaining position, the safety element (11) is not covered by said outer sleeve (17) and the safety element (11) is visible;
wherein the safety element (11) comprises an elastically loose portion(18), wherein, when the outer sleeve (17) is in the release position, the elastically loose portion (18) lies compressed between said outer sleeve (17) and the first body (2A) or the second body (2B); wherein when the outer sleeve (17) is in the retaining position, the elastically loose portion (18) lies side by side with an edge of the outer sleeve (17), protrudes radially and prevents the outer sleeve (17) from sliding to the release position.

2. Device according to claim 1, wherein, in the engaged configuration, the continuous perimeter wall of the main body (2) exhibits a circumferential cut (16) that delimits the first body (2A) and the second body (2B) and delimits said at least a first hook (12) and said at least a second hook (13).

3. Device according to the preceding claim, wherein the circumferential cut (16), at said at least a first hook (12) and said at least a second hook (13), exhibits an S-shaped outline.

4. Device according to any one of claims 1 to 3, wherein, in a lateral view of the first body (2A) and of the second body (2B), said at least a first hook (12) and said at least a second hook (13) exhibit an L-shaped outline.

5. Device according to any one of the preceding claims, wherein at least one of said first body (2A) and second body (2B) comprises a first part (19) and a second part (20) juxtaposed with each other, and axially aligned and free to rotate relative to each other.

6. Device according to the preceding claim, wherein an outer ring nut (21) is integral to the first part (19) or to the second part (20) and is configured to axially retain the second part (20) or the first part (19) and allow the first part (19) and the second part (20) to be free to rotate relative to each other.

7. Device according to any one of the preceding claims, wherein the overhang (14) and the recess (15) are placed near a reference plane (P) containing a longitudinal axis (X-X) of the main body (2); wherein the overhang (14) exhibits a height (H) with respect to a bottom of the recess (15), the height (H) being measured perpendicular to said reference plane (P), wherein the overhang (14) exhibits a width (L) measured parallel to the longitudinal axis (X-X), wherein the width (L) of the overhang (14) is similar or equal to the height (H).

8. Device according to any one of the preceding claims, wherein the overhang (14) and the recess (15) exhibit a rectangular or square perimeter.

9. Device according to any one of claims 1 to 7, wherein the overhang (14) and the recess (15) exhibit a trapezoidal perimeter, in which a major base of the trapezoidal recess (15) corresponds to a bottom of said recess (15) and a major base of the trapezoidal overhang (14) corresponds to a free end of said overhang (14).

10. Device according to any of the preceding claims, wherein the safety element (11) is colored so that it can be visually distinguished.

11. Device according to any of the preceding claims, wherein the safety element (11) is a clamp or hairpin engaged on the first body (2A) or on the second body (2B).

12. A method of making the quick coupling device of any one of the preceding claims, comprising:
making the main body (2) in one piece;
cutting the main body (2) in two to form the first body (2A) and the second
body (2B) shaped to removably engage with each other at the junction area and having the features of the first body (2A) and the second body (2B) according to any one of the preceding claims;
providing a sleeve (17) and coupling said sleeve (17) to the first body (2A) or to the second body (2B) such that said sleeve (17) is arranged around the main body (2) and can slide on said first body (2A) or second body (2B)
providing a safety element (11) having the features according to any one of the preceding claims and arranging said safety element (11) at least partially around the first body (2A) or the second body (2B) in accordance with the features of any one of the preceding claims;
wherein the step of cutting the main body (2) in two is made by wire electroerosion or laser cutting.

## Patentansprüche

1. Schnellkopplungsvorrichtung, umfassend:
einen Hauptkörper (2), der intern einen Durchgangskanal (3) für ein Fluid begrenzt, wobei der Hauptkörper (2) ein erstes Ende (4) und ein zweites Ende (5) gegenüberliegend bzw. entgegengesetzt zu dem ersten Ende (4) aufweist;
wobei das erste Ende (4) und das zweite Ende (5) konfiguriert sind, mit jeweiligen Kanälen zu verbinden;
eine Außenhülse (17), die um den Hauptkörper (2) herum angeordnet ist;
wobei der Hauptkörper (2) einen ersten Körper (2A), der intern einen ersten Abschnitt (3A) des Durchgangskanals (3) begrenzt, und einen zweiten Körper (2B) umfasst, der intern einen zweiten Abschnitt (3B) des Durchgangskanals (3) begrenzt;
wobei der erste Körper (2A) und der zweite Körper (2B) so geformt sind, dass sie an einem Verbindungsbereich entfernbar ineinander eingreifen; wobei in einer Eingriffskonfiguration des Hauptkörpers (2) der erste Körper (2A) und der zweite Körper (2B) axial ausgerichtet und entlang einer axialen Richtung begrenzt bzw. eingeschränkt sind und sich entlang zumindest einer Richtung quer zu der axialen Richtung frei außer Eingriff bringen können;
wobei in der Eingriffskonfiguration des Hauptkörpers (2) die Außenhülse (17) verschiebbar an bzw. auf dem Hauptkörper (2) zwischen einer Rückhalteposition, in der sich die Außenhülse (17) um die Verbindungszone herum befindet und ein Lösen des ersten Körpers (2A) von dem zweiten Körper (2B) entlang der zumindest einen Richtung quer zu der axialen Richtung verhindert, und einer Freigabeposition beweglich bzw. bewegbar ist, in der die Außenhülse (17) von dem Verbindungsbereich beabstandet ist und ein Lösen des ersten Körpers (2A) von dem zweiten Körper (2B) entlang der zumindest einen Richtung quer zu der axialen Richtung ermöglicht;
wobei der erste Körper (2A) eine erste Umfangswand (7A) aufweist, die den ersten Abschnitt (3A) begrenzt; wobei der zweite Körper (2B) eine zweite Umfangswand (7B) aufweist, die den zweiten Abschnitt (3B) begrenzt; wobei eine Kante bzw. ein Rand der ersten Umfangswand (7A) gegenüberliegend bzw. entgegengesetzt zu dem ersten Ende (4) und eine Kante bzw. ein Rand der zweiten Umfangswand (7B) gegenüberliegend bzw. entgegengesetzt zu dem zweiten Ende (5) so geformt sind, dass sie entfernbar ineinander eingreifen;
wobei zumindest ein erster Haken (12) in der Kante der ersten Umfangswand (7A) geformt ist; wobei zumindest ein zweiter Haken (13) in der Kante der zweiten Umfangswand (7B) geformt ist; wobei der zumindest eine erste Haken (12) und der zumindest eine zweite Haken (13) konfiguriert sind, ineinander einzugreifen; wobei jeder des zumindest einen ersten Hakens (12) und des zumindest einen zweiten Hakens (13) einen Überhang (14) und eine Aussparung (15) aufweist, wobei der Überhang (14) die Aussparung (15) begrenzt;
wobei, wenn sich der Hauptkörper (2) in der Eingriffskonfiguration befindet und der erste Haken (12) mit dem zweiten Haken (13) in Eingriff ist, die erste Umfangswand (7A) und die zweite Umfangswand (7B) eng nebeneinander angeordnet sind, so dass eine aus dem Hauptkörper (2) resultierende Umfangswand durchgehend ist;
wobei die erste Umfangswand (7A) zwei erste Haken (12) aufweist, die sich in radial gegenüberliegenden bzw. entgegengesetzten Bereichen des ersten Körpers (2A) befinden; wobei die zweite Umfangswand (7B) zwei zweite Haken (13) aufweist, die sich in radial gegenüberliegenden bzw. entgegengesetzten Bereichen des zweiten Körpers (2B) befinden; wobei die beiden ersten Haken (12) konfiguriert sind, mit den beiden zweiten Haken (13) in Eingriff zu kommen;
**dadurch gekennzeichnet, dass** die Ecken des Überhangs (14) und/oder der Aussparung (15) abgerundet sind, um Verformungen und Fehler- oder Schwächungspunkte während eines Betriebs mit hohem Druck zu verhindern;
wobei die Vorrichtung ferner ein Sicherheitselement (11) umfasst, das zumindest teilweise um den ersten Körper (2A) oder den zweiten Körper (2B) herum angeordnet ist; wobei, wenn die Außenhülse (17) in der Freigabeposition ist, das Sicherheitselement (11) sich radial zwischen der Außenhülse (17) und dem ersten Körper (2A) oder dem zweiten Körper (2B) befindet und die Außenhülse (17) das Sicherheitselement (11) bedeckt und verbirgt; wobei, wenn die Außenhülse (17) in der Rückhalteposition ist, das Sicherheitselement (11) nicht von der Außenhülse (17) bedeckt ist und das Sicherheitselement (11) sichtbar ist;
wobei das Sicherheitselement (11) einen elastisch losen Abschnitt (18) umfasst; wobei, wenn die Außenhülse (17) in der Freigabeposition ist, der elastisch lose Abschnitt (18) komprimiert zwischen der Außenhülse (17) und dem ersten Körper (2A) oder dem zweiten Körper (2B) liegt; wobei, wenn die Außenhülse (17) in der Rückhalteposition ist, der elastisch lose Abschnitt (18) Seite an Seite mit einer Kante bzw. einem Rand der Außenhülse (17) liegt, radial vorsteht und verhindert, dass die Außenhülse (17) in die Freigabeposition gleitet.

2. Vorrichtung nach Anspruch 1, wobei in der Eingriffskonfiguration die durchgehende Umfangswand des Hauptkörpers (2) einen umlaufenden Schnitt (16) aufweist, der den ersten Körper (2A) und den zweiten Körper (2B) begrenzt und den zumindest einen ersten Haken (12) und den zumindest einen zweiten Haken (13) begrenzt.

3. Vorrichtung nach dem vorhergehenden Anspruch, wobei der umlaufende Schnitt (16) an dem zumindest einen ersten Haken (12) und dem zumindest einen zweiten Haken (13) einen S-förmigen Umriss aufweist.

4. Vorrichtung nach einem der Ansprüche 1 bis 3, wobei in einer Seitenansicht des ersten Körpers (2A) und des zweiten Körpers (2B) der zumindest eine erste Haken (12) und der zumindest eine zweite Haken (13) einen L-förmigen Umriss aufweisen.

5. Vorrichtung nach einem der vorhergehenden Ansprüche, wobei zumindest einer des ersten Körpers (2A) und des zweiten Körpers (2B) einen ersten Teil (19) und einen zweiten Teil (20) umfasst, die nebeneinander angeordnet und axial ausgerichtet sind und sich frei relativ zueinander drehen können.

6. Vorrichtung nach dem vorhergehenden Anspruch, wobei eine äußere Ringmutter (21) integral mit dem ersten Teil (19) oder dem zweiten Teil (20) ist und konfiguriert ist, den zweiten Teil (20) oder den ersten Teil (19) axial zurückzuhalten und es dem ersten Teil (19) und dem zweiten Teil (20) zu ermöglichen, sich frei relativ zueinander zu drehen.

7. Vorrichtung nach einem der vorhergehenden Ansprüche, wobei der Überhang (14) und die Aussparung (15) in der Nähe einer Referenzebene (P) platziert sind, die eine Längsachse (X-X) des Hauptkörpers (2) enthält; wobei der Überhang (14) eine Höhe (H) in Bezug auf einen Boden der Aussparung (15) aufweist, wobei die Höhe (H) senkrecht zu der Referenzebene (P) gemessen wird, wobei der Überhang (14) eine Breite (L) aufweist, die parallel zu der Längsachse (X-X) gemessen wird, wobei die Breite (L) des Überhangs (14) ähnlich oder gleich der Höhe (H) ist.

8. Vorrichtung nach einem der vorhergehenden Ansprüche, wobei der Überhang (14) und die Aussparung (15) einen rechteckigen oder quadratischen Umfang aufweisen.

9. Vorrichtung nach einem der Ansprüche 1 bis 7, wobei der Überhang (14) und die Aussparung (15) einen trapezförmigen Umfang aufweisen, bei dem eine Hauptbasis der trapezförmigen Aussparung (15) einem Boden der Aussparung (15) entspricht und eine Hauptbasis des trapezförmigen Überhangs (14) einem freien Ende des Überhangs (14) entspricht.

10. Vorrichtung nach einem der vorhergehenden Ansprüche, wobei das Sicherheitselement (11) gefärbt ist, sodass es optisch unterschieden werden kann.

11. Vorrichtung nach einem der vorhergehenden Ansprüche, wobei das Sicherheitselement (11) eine Klammer oder Haarnadel ist, die an dem ersten Körper (2A) oder an dem zweiten Körper (2B) in Eingriff ist.

12. Verfahren zum Herstellen der Schnellkopplungsvorrichtung nach einem der vorhergehenden Ansprüche, umfassend:
Herstellen des Hauptkörpers (2) in einem Stück;
Entzweischneiden des Hauptkörpers (2), um den ersten Körper (2A) und den zweiten Körper (2B) zu bilden, die so geformt sind, dass sie an dem Verbindungsbereich entfernbar ineinander eingreifen, und die Merkmale des ersten Körpers (2A) und des zweiten Körpers (2B) nach einem der vorhergehenden Ansprüche aufweisen;
Bereitstellen einer Hülse (17) und Koppeln der Hülse (17) mit dem ersten Körper (2A) oder dem zweiten Körper (2B), so dass die Hülse (17) um den Hauptkörper (2) herum angeordnet ist und an bzw. auf dem ersten Körper (2A) oder dem zweiten Körper (2B) gleiten kann;
Bereitstellen eines Sicherheitselements (11) mit den Merkmalen nach einem der vorhergehenden Ansprüche und Anordnen des Sicherheitselements (11) zumindest teilweise um den ersten Körper (2A) oder den zweiten Körper (2B) nach den Merkmalen eines der vorhergehenden Ansprüche;
wobei der Schritt des Entzweischneidens des Hauptkörpers (2) durch Drahtelektroerosion oder Laserschneiden erfolgt.

## Revendications

1. Dispositif de raccordement rapide, comprenant :
un corps principal (2) délimitant au plan interne un conduit de passage (3) pour un fluide, dans lequel ledit corps principal (2) présente une première extrémité (4) et une seconde extrémité (5) opposée à la première extrémité (4) ;
dans lequel la première extrémité (4) et la seconde extrémité (5) sont configurées pour être raccordées aux conduites respectives ;
un manchon externe (17) agencé autour du corps principal (2) ;
dans lequel le corps principal (2) comprend un premier corps (2A) délimitant au plan interne une première section (3A) dudit conduit de passage (3) et un second corps (2B) délimitant au plan interne une seconde section (3B) dudit conduit de passage (3) ;
dans lequel le premier corps (2A) et le second corps (2B) sont mis en forme pour s'engager de manière amovible l'un par rapport à l'autre au niveau d'une zone de jonction ; dans lequel, sous une configuration engagée du corps principal (2), le premier corps (2A) et le second corps (2B) sont alignés et axialement contraints le long d'un sens axial et sont libres de se désengager le long d'au moins un sens transversal au sens axial ;
dans lequel, sous la configuration engagée du corps principal (2), le manchon externe (17) est mobile de manière coulissante sur ledit corps principal (2) entre une position de retenue, dans laquelle le manchon externe (17) est localisé autour de la zone de jonction et empêche la libération du premier corps (2A) du second corps (2B) le long dudit au moins un sens transversal au sens axial, et une position de libération, dans laquelle le manchon externe (17) est espacé à l'écart de la zone de jonction et permet la libération du premier corps (2A) du second corps (2B) le long dudit au moins un sens transversal au sens axial ;
dans lequel le premier corps (2A) fait preuve d'une première paroi de périmètre (7A) délimitant la première section (3A) ; dans lequel le second corps (2B) fait preuve d'une seconde paroi de périmètre (7B) délimitant la seconde section (3B) ; dans lequel un bord de la première paroi de périmètre (7A) opposée à la première extrémité (4) et un bord de la seconde paroi de périmètre (7B) opposée à la seconde extrémité (5) sont mis en forme pour s'engager de manière amovible l'un avec l'autre ;
dans lequel au moins un premier crochet (12) est mis en forme dans le bord de la première paroi de périmètre (7A) ; dans lequel au moins un second crochet (13) est mis en forme dans le bord de la seconde paroi de périmètre (7B) ; dans lequel ledit au moins un premier crochet (12) et ledit au moins un second crochet (13) sont configurés pour s'engager l'un par rapport à l'autre ; chacun dudit au moins un premier crochet (12) et dudit au moins un second crochet (13) faisant preuve d'une avancée (14) et d'un renfoncement (15), dans lequel l'avancée (14) délimite le renfoncement (15) ;
dans lequel, lorsque le corps principal (2) se trouve sous la configuration engagée et que le premier crochet (12) est engagé avec le second crochet (13), la première paroi de périmètre (7A) et la seconde paroi de périmètre (7B) sont intimement juxtaposées l'une par rapport à l'autre de sorte qu'une paroi de périmètre résultant du corps principal (2) est continue ;
dans lequel la première paroi de périmètre (7A) fait preuve de deux premiers crochets (12) localisés dans des régions radialement opposées du premier corps (2A) ;
dans lequel la seconde paroi de périmètre (7B) fait preuve de deux seconds crochets (13) localisés dans des régions radialement opposées du second corps (2B) ; dans lequel les deux premiers crochets (12) sont configurés pour s'engager avec les deux seconds crochets (13) ;
**caractérisé en ce que** les coins de l'avancée (14) et/ou du renfoncement (15) sont arrondis pour empêcher des déformations et des points de défaillance ou d'affaiblissement durant le fonctionnement sous haute pression ;
dans lequel le dispositif comprend en outre un élément de sécurité (11) agencé au moins partiellement autour du premier corps (2A) ou du second corps (2B) ; dans lequel, lorsque le manchon externe (17) se trouve dans la position de libération, l'élément de sécurité (11) est radialement localisé entre ledit manchon externe (17) et le premier corps (2A) ou le second corps (2B) et le manchon externe (17) recouvre et cache l'élément de sécurité (11) ; dans lequel, lorsque le manchon externe (17) se trouve dans la position de retenue, l'élément de sécurité (11) n'est pas recouvert par ledit manchon externe (17) et l'élément de sécurité (11) est visible ;
dans lequel l'élément de sécurité (11) comprend une portion élastiquement lâche (18), dans lequel, lorsque le manchon externe (17) se trouve dans la position de libération, la portion élastiquement lâche (18) repose comprimée entre ledit manchon externe (17) et le premier corps (2A) ou le second corps (2B) ; dans lequel lorsque le manchon externe (17) se trouve dans la position de retenue, la portion élastiquement lâche (18) repose côte-à-côte avec un bord du manchon externe (17), faisant saillie radialement et empêchant le manchon externe (17) de coulisser vers la position de libération.

2. Dispositif selon la revendication 1, dans lequel, dans la configuration engagée, la paroi de périmètre continue du corps principal (2) fait preuve d'une découpe circonférentielle (16) qui délimite le premier corps (2A) et le second corps (2B) et qui délimite ledit au moins un premier crochet (12) et ledit au moins un second crochet (13).

3. Dispositif selon la revendication précédente, dans lequel la découpe circonférentielle (16), au niveau dudit au moins un premier crochet (12) et dudit au moins un second crochet (13), fait preuve d'un contour en forme de « S ».

4. Dispositif selon l'une quelconque des revendications 1 à 3, dans lequel, dans une vue latérale du premier corps (2A) et du second corps (2B), ledit au moins un premier crochet (12) et ledit au moins un second crochet (13) font preuve d'un contour en forme de « L ».

5. Dispositif selon l'une quelconque des revendications précédentes, dans lequel au moins l'un desdits premier corps (2A) et second corps (2B) comprend une première partie (19) et une seconde partie (20) juxtaposées l'une par rapport à l'autre, et axialement alignées et libres de tourner l'une par rapport à l'autre.

6. Dispositif selon la revendication précédente, dans lequel un contre-écrou de blocage externe (21) est solidaire de la première partie (19) ou de la seconde partie (20) et est configuré pour retenir axialement la seconde partie (20) ou la première partie (19) et permettre à la première partie (19) et à la seconde partie (20) d'être libres de tourner l'une par rapport à l'autre.

7. Dispositif selon l'une quelconque des revendications précédentes, dans lequel l'avancée (14) et le renfoncement (15) sont placés près d'un plan de référence (P) contenant un axe longitudinal (X-X) du corps principal (2) ; dans lequel l'avancée (14) fait preuve d'une hauteur (H) par rapport à un fond du renfoncement (15), la hauteur (H) étant mesurée perpendiculaire audit plan de référence (P), dans lequel l'avancée (14) fait preuve d'une largeur (L) mesurée parallèle à l'axe longitudinal (X-X), dans lequel la largeur (L) de l'avancée (14) est similaire ou égale à la hauteur (H).

8. Dispositif selon l'une quelconque des revendications précédentes, dans lequel l'avancée (14) et le renfoncement (15) font preuve d'un périmètre rectangulaire ou carré.

9. Dispositif selon l'une quelconque des revendications 1 à 7, dans lequel l'avancée (14) et le renfoncement (15) font preuve d'un périmètre trapézoïdal, dans lequel une base majeure du renfoncement (15) trapézoïdal correspond à un fond dudit renfoncement (15) et une base majeure de l'avancée (14) trapézoïdale correspond à une extrémité libre de ladite avancée (14).

10. Dispositif selon l'une quelconque des revendications précédentes, dans lequel l'élément de sécurité (11) est coloré de sorte qu'il peut être visuellement distingué.

11. Dispositif selon l'une quelconque des revendications précédentes, dans lequel l'élément de sécurité (11) est une pince ou une goupille en épingle à cheveux engagée sur le premier corps (2A) ou sur le second corps (2B).

12. Procédé de fabrication du dispositif de raccordement rapide selon l'une quelconque des revendications précédentes, comprenant :
la fabrication du corps principal (2) en une seule pièce ;
la découpe du corps principal (2) en deux pour former le premier corps (2A) et le second corps (2B) mis en forme pour s'engager amovibles l'un par rapport à l'autre au niveau de la zone de jonction et ayant les caractéristiques du premier corps (2A) et du second corps (2B) selon l'une quelconque des revendications précédentes ;
la fourniture d'un manchon (17) et l'accouplement dudit manchon (17) au premier corps (2A) ou au second corps (2B) de sorte que ledit manchon (17) est agencé autour du corps principal (2) et peut coulisser sur lesdits premier corps (2A) ou second corps (2B),
la fourniture d'un élément de sécurité (11) ayant les caractéristiques selon l'une quelconque des revendications précédentes et l'agencement dudit élément de sécurité (11) au moins partiellement autour du premier corps (2A) ou du second corps (2B) selon les caractéristiques selon l'une quelconque des revendications précédentes ;
dans lequel l'étape de découpe du corps principal (2) en deux est effectuée par étincelage par fil ou découpe laser.
